# DEMANDE DE BREVET EUROPEEN

(11) **EP 0 784 198 A1**
(43) Date de publication de la demande: **16.07.1997**
(21) Numéro de dépôt: 96402812.0
(22) Date de dépôt: 19.12.1996
(51) Int. Cl.: G01B 11/00, G01N 21/88

(54) **Dispositif de contrôle du revêtement d'un produit filaire en mouvement à encombrement réduit**

(30) Priorité: 28.12.1995 FR 9515660
(71) Demandeur: ALCATEL ALSTHOM COMPAGNIE GENERALE D'ELECTRICITE, 75382 Paris Cédex 08 (FR)
(72) Inventeur: Floch, Bernard, 60240 Chaumont en Vexin (FR); Rolland, Didier, 95110 Sannois (FR)
(74) Mandataire: Lamoureux, Bernard

(57) **Abrégé**

L'invention concerne un dispositif de contrôle du revêtement d'un produit filaire en mouvement, comprenant au moins une source lumineuse (23, 24) coopérant d'une part avec des moyens (25, 26) de contrôle du centrage du produit filaire par rapport à des moyens de revêtement, et d'autre part avec des moyens (27) de contrôle de la qualité de ce revêtement. Avantageusement, les moyens de contrôle du centrage comprennent deux sources lumineuses (23, 24) placées à 90° l'une par rapport à l'autre, dans un plan perpendiculaire audit produit filaire, les faisceaux lumineux émis par lesdites sources lumineuses se croisant au centre dudit produit filaire, lorsque celui-ci est correctement centré, et les moyens de contrôle de la qualité du revêtement comprennent un récepteur optique (27) placé entre les sources lumineuses, dans le même plan et à 45° de chacune d'entre elles, de façon à recevoir les faisceaux lumineux réfléchis par le revêtement.

Application à la fabrication de fibres optiques.

## Description

Le domaine de l'invention est celui de la fabrication de produits filaires. Plus précisément, l'invention concerne le contrôle du revêtement de tels produits filaires. Un tel contrôle englobe notamment deux aspects, à savoir le centrage du produit par rapport aux moyens de revêtement d'une part, et la qualité du revêtement (c'est-à-dire la détection des défauts) d'autre part.

Un domaine privilégié d'application de l'invention est celui de l'enduction des fibres optiques. Cet aspect est décrit plus en détail par la suite. Toutefois, l'invention ne se limite pas aux fibres optiques, mais s'applique également à la production de tout produit filaire en mouvement, qu'il soit gainé ou non.

Les opérations de contrôle du centrage et de la qualité du revêtement sont classiques, et nécessaires, dans tout procédé de fabrication de fibre optique. Ce revêtement a notamment pour rôle de protéger la fibre des agressions de l'environnement. Il s'agit en général d'un revêtement plastique à base d'une résine polymérisable. Souvent, ce revêtement est constitué de deux couches polymérisables par ultraviolet, du type époxy-acrylate ou uréthane-acrylate.

On comprend aisément qu'un tel revêtement doive présenter une répartition et une régularité parfaites pour ne pas perturber la transmission des signaux optiques. Dans le cas contraire, des phénomènes de microcourbures peuvent apparaître, entraînant des pertes.

Les machines connues de fabrication de fibres optiques comprennent donc deux instruments de contrôle :
- un dispositif de contrôle du centrage de la fibre, permettant de visualiser la position de la fibre dans l'enduction, afin de parfaire le réglage de la position des enducteurs en dynamique ;
- un dispositif de contrôle de la qualité du revêtement, permettant de détecter en cours d'élaboration l'apparition de défauts de surface de l'enduction.

On connaît notamment par le document DE-A-1 573 795 un dispositif utilisant la lumière transmise par la fibre optique pour, d'une part, contrôler le centrage de la fibre et , d'autre part, détecter des impuretés à l'intérieur du revêtement. Un autre dispositif est connu par le document DE-A-2 855 598; là aussi, la lumière transmise est utilisée pour contrôler le centrage de la fibre. Elle est en outre utilisée, d'une manière non explicitée, pour contrôler la qualité du revêtement.

Le problème majeur posé par ces dispositifs est celui de leur encombrement. En effet, la hauteur des fibreuses est limitée, et il est souvent très difficile de les mettre en place, notamment en offrant une ergonomie minimale aux utilisateurs.

Par ailleurs, les systèmes de centrage connus utilisent habituellement des lasers à gaz (He Ne par exemple). Ces lasers sont soit très encombrants, soit d'une durée de vie limitée, et incompatible avec le fonctionnement 24 heures sur 24 des fibreuses. On sait en effet que plus un tube laser à gaz est petit, plus sa durée de vie est réduite.

L'invention a notamment pour objectif de pallier ces inconvénients de l'état de la technique.

Plus précisément, l'invention à pour objectif de fournir des moyens de contrôle de la qualité du revêtement d'un produit filaire, tel qu'une fibre optique, qui soient moins encombrant que les dispositifs connus.

Un autre objectif de l'invention est de fournir de tels moyens de contrôle, qui soient moins coûteux à réaliser que les dispositifs connus, et plus faciles à mettre en oeuvre.

L'invention a également pour objectif de fournir de tels moyens de contrôle, qui permettent des mesures et un contrôle en ligne, afin d'améliorer la qualité des produits fabriqués. Notamment, les moyens de contrôle selon l'invention doivent permettre la détection de tout défaut récurrent, ainsi que de tout défaut de comportement (produit ou machine).

Un objectif supplémentaire de l'invention est de fournir de tels moyens de contrôle, permettant de limiter les pertes, en cas de défaut constaté.

Ces objectifs, ainsi que d'autres qui apparaîtront par la suite, sont obtenus selon l'invention par un dispositif de contrôle du revêtement d'un produit filaire en mouvement, comprenant au moins une source lumineuse coopérant d'une part avec des moyens de contrôle du centrage dudit produit filaire par rapport à des moyens de revêtement, et d'autre part avec des moyens de contrôle de la qualité dudit revêtement, dispositif dans lequel lesdits moyens de contrôle de la qualité dudit revêtement comprennent un récepteur optique placé de façon à recevoir les faisceaux lumineux réfléchis par ledit revêtement.

Ainsi, selon l'invention, la source de lumière est utilisée de deux façons distinctes, pour deux rôles indépendants. Comme on le verra par la suite, la lumière traversant le produit peut être utilisée pour le centrage, alors que la lumière réfléchie, issue de la même source, va servir à l'étude de la qualité du revêtement.

Cette nouvelle structure permet clairement de réduire à un faible volume l'équipement nécessaire à la surveillance des deux paramètres de contrôle essentiels. Ceci permet de remédier au problème du manque de place sur les fibreuses, notamment vis-à-vis des dispositifs décrits dans les documents DE-A-1 573 795 et DE-A-2 855 598 qui requièrent des moyens d'émission et des moyens de réception disposés de part et d'autre de la fibre.

Par ailleurs, il apparaît clairement que l'utilisation d'une même source lumineuse pour deux fonctions distinctes permet de réduire le coût des moyens de contrôle.

De façon avantageuse, le dispositif de l'invention comprend deux sources lumineuses placées à 90° l'une par rapport à l'autre, dans un plan perpendiculaire au produit filaire, les faisceaux lumineux émis par les sources lumineuses se croisant au centre dudit produit filaire, lorsque celui-ci est correctement centré.

Dans ce cas, les moyens de contrôle du centrage comprennent préférentiellement deux écrans dépolis placés chacun perpendiculairement au faisceau lumineux d'une des sources lumineuses, le produit filaire circulant entre chaque source lumineuse et l'écran dépoli correspondant.

Ainsi, l'opérateur voit sur les écrans les franges de diffraction créées par le faisceau lumineux au travers du produit (au travers de l'enduction et de la silice dans le cas d'une fibre optique). Lorsque le produit est bien centré, la tache lumineuse correspondant à son centre optique se trouve à égales distances de deux taches correspondant aux transitions entre le produit et son revêtement.

Avantageusement, le récepteur optique des moyens de contrôle de la qualité du revêtement est placé entre les sources lumineuses, dans le même plan et à 45° de chacune d'entre elles.

Ce récepteur reçoit donc la réflexion de la tache lumineuse des sources lumineuses sur la surface de la fibre. L'analyse de cette réflexion permet de détecter les éventuels défauts du revêtement.

Selon un mode de réalisation particulier de l'invention, le récepteur comprend une optique de reprise, un photo-détecteur et une chaîne d'amplification.

De façon avantageuse, les sources lumineuses sont des lasers semi-conducteurs. Ce choix s'avère particulièrement avantageux, par rapport aux équipements classiques utilisant des lasers à gaz, notamment en ce qui concerne l'encombrement résultant et la durée de vie.

L'invention peut être utilisée pour le contrôle du revêtement de très nombreux produits filaires et notamment les fibres optiques et les fils de cuivres vernis.

Selon un mode de réalisation avantageux de l'invention, le dispositif comprend des moyens de réglage d'un seuil d'alarme représentatif d'un niveau de dégradation de la qualité du revêtement du produit filaire.

Selon une autre caractéristique préférentielle, il peut également comprendre des moyens de filtrage du signal délivré par le récepteur, dont la fréquence de coupure est réglable, afin de détecter des défauts récurrents particuliers.

Avantageusement, la bande passante des moyens de filtrage peut être ajustée automatiquement, en fonction de la vitesse linéaire dudit produit linéaire.

Enfin, le dispositif de l'invention peut coopérer avec des moyens de traitement externes analysant en continu le signal analogique délivré par le récepteur. Par exemple, un analyseur à transformation de Fourier rapide (FFT) en temps réel peut permettre de repérer l'origine d'une vibration de la fibre, ou le pas de défauts périodiques.

De plus, l'enregistrement des paramètres de fibrage en continu permet un suivi qualitatif de la production.

D'autres caractéristiques et avantages de l'invention apparaîtront à la lecture de la description suivante d'un mode de réalisation préférentiel de l'invention, donné à titre de simple exemple illustratif et non limitatif, et des dessins annexés parmi lesquels :
- la figure 1 illustre de façon schématique une machine de fibrage, de type connu en soi, équipée du dispositif de l'invention ;
- la figure 2 présente l'implantation des éléments optiques dans le dispositif de l'invention ;
- la figure 3 présente de façon détaillée l'optique de reprise du récepteur de la figure 2 ;
- la figure 4 est un schéma synoptique simplifié des éléments électroniques du dispositif de l'invention.

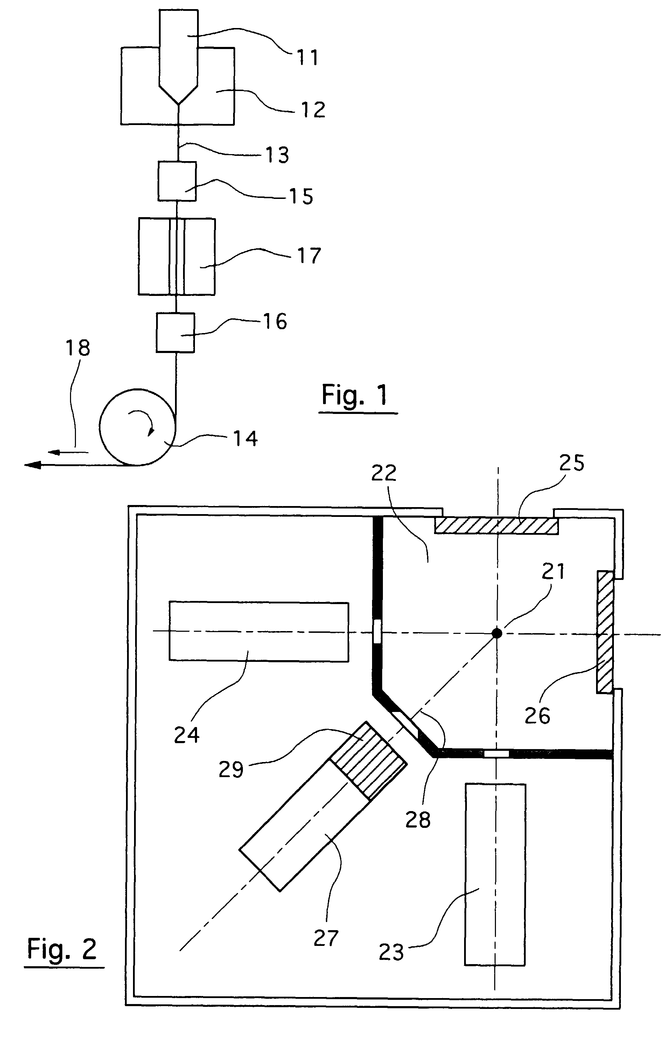

Le mode de réalisation décrit ci-dessous concerne plus particulièrement la fabrication de fibres optiques. On rappelle rapidement les principes de fabrication de tels fibres, en relation avec la figure 1.

La production d'une fibre optique s'effectue en deux phases : on élabore tout d'abord une préforme, ou forme condensée de la fibre, qui se présente sous la forme d'un cylindre d'un diamètre compris, par exemple, entre 14 et 70 mm, pour une longueur de 60 à 100 cm. Une telle préforme permet la fabrication de 6 à 300 km de fibre.

L'opération de fibrage proprement dite est obtenue par étirage de la préforme. La préforme 11 est introduite dans un four de fibrage 12, dont la température est en général de l'ordre de 2 000° C, en fonction de la nature et de la quantité des dopants. La préforme devient visqueuse, de façon qu'elle "coule" sous son propre poids. On obtient alors une fibre 13 (en général de 125 µm de diamètre).

La vitesse de descente de la préforme 11 est de l'ordre de quelques centimètres par minute. La fibre 13 est entraînée par un cabestan 14, à une vitesse de quelques dizaines à au moins plusieurs centaines de mètres par minute.

Afin de protéger la fibre des agressions de l'environnement, il est nécessaire de la recouvrir d'un revêtement plastique, généralement constitué d'une résine polymérisable. La résine est appliquée, sous une forme liquide, sur la fibre 13 après la sortie du four de fibrage 12, à l'aide d'une filière d'enduction 15. Le revêtement est en général composé de deux couches facilement polymérisables, par exemple à base d'époxy-acrylate ou d'uréthane-acrylate. La couche inférieure présente une dureté plus faible, afin de limiter les pertes par microcourbures.

Ensuite, la fibre passe dans un four de séchage et de polymérisation 17, qui active la polymérisation par énergie thermique et/ou rayonnement ultraviolet, afin que le revêtement soit solidifié avant que la fibre n'atteigne le cabestan 14.

Enfin, la fibre est dirigé (18) vers un tambour de stockage.

Le dispositif de l'invention 16 a pour but de vérifier la qualité de l'enduction, et de faciliter le centrage de la fibre dans l'enducteur 15. Il est placé après la sortie du four 17.

Ce dispositif 16 comprend d'une part des moyens optiques, et d'autre part des moyens électroniques.

L'implantation des éléments optiques est illustrée en figure 2.

La fibre 21 circule dans un passage de fibre 22. Deux têtes laser 23, 24 solides (lasers à semi-conducteur), de petite taille, émettent en direction de la fibre un faisceau lumineux dans le domaine visible (rouge par exemple). Ces deux têtes laser sont placées dans un même plan horizontal, c'est-à-dire perpendiculairement à la fibre 21. Les faisceaux lumineux sont placés à 90° l'un par rapport à l'autre, et illuminent ponctuellement la fibre 21.

Deux écrans dépolis 25, 26 sont placés perpendiculaires à l'axe des lasers 23, 24, de façon que la fibre 21 défile entre la tête laser 23, 24 et l'écran dépoli 25, 26 correspondant.

L'opérateur voit donc sur les écrans 25, 26 les franges de diffraction créées au passage du faisceau laser au travers des enductions et de la silice. Il distingue alors une ligne horizontale sur laquelle les zones de transition époxy / époxy et époxy / silice se manifestent par une surbrillance locale. La fibre se comportant comme une lentille cylindrique, elle provoque également une tache lumineuse par concentration des rayons. La position de cette tache lumineuse indique le centre optique.

Lorsque la fibre est bien au centre de l'enduction, les taches correspondant aux couches époxy se trouvent de part et d'autre, à égales distances, de ce centre optique. Si ce n'est pas le cas, l'opérateur modifie en dynamique la position relative de la fibre et de l'enducteur, afin d'obtenir le centrage voulu.

Cette opération peut également être effectuée de façon automatique. Par exemple, les écrans dépolis peuvent être remplacés par des capteurs délivrant à une unité de traitement une image courante qui est comparée à une image de référence, de façon à piloter des moyens de centrage.

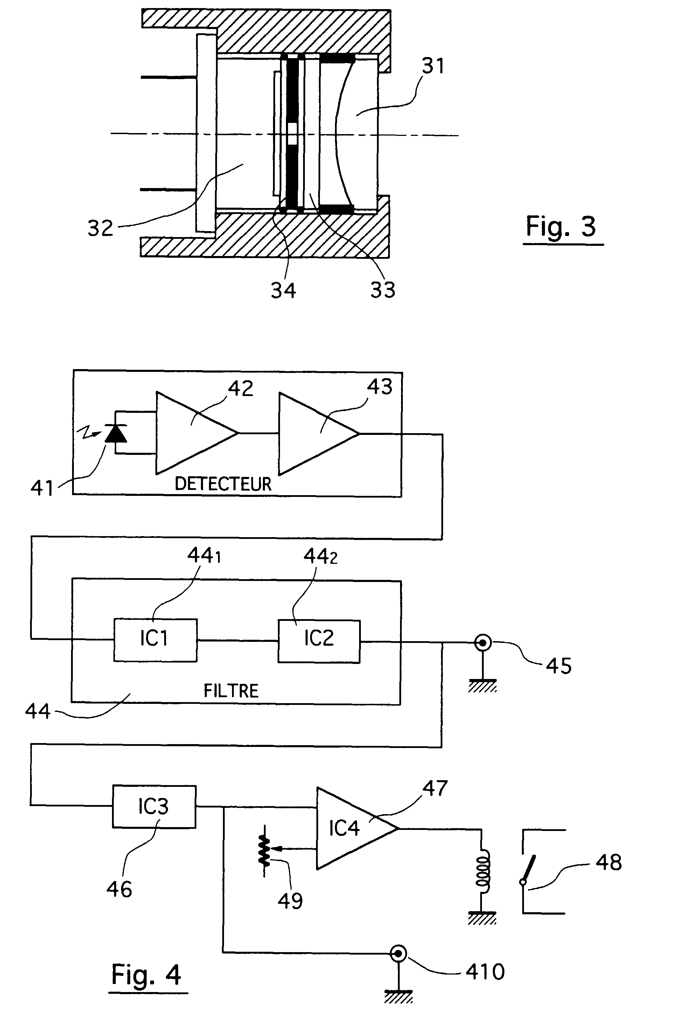

Le dispositif de l'invention comprend par ailleurs des moyens de détection des défauts de revêtement, comprenant une optique de reprise 29 (détaillée en figure 3) et un récepteur 27. Ces moyens sont placés dans le même plan que les têtes laser 23, 24, et à 45° de chacune d'elles.

L'optique de reprise 29 reçoit la réflexion 28 de la tache lumineuse des deux faisceaux laser sur la surface de la fibre 21. L'analyse de la lumière réfléchie permet de repérer les différents défauts pouvant affecter le revêtement de la fibre. Comme on le verra par la suite, les réglages de l'électronique permettent de préciser le type de défauts recherchés.

La figure 3 illustre l'optique de reprise 29 de la figure 2. Celle-ci est constituée d'une lentille 31, dont la focale est adaptée à la distance entre la fibre et le détecteur (photodiode) 32, d'un filtre rouge 33 et d'un trou de filtrage 34.

Le détecteur 32 est connecté aux moyens de traitement électroniques présentés en figure 4. Ces moyens ont pour rôle essentiel de détecter les défauts et de déclencher une alarme ou toutes autres actions en cas de dégradation de la qualité du revêtement des fibres en cours de fabrication.

La photodiode 41 est associée à un préamplificateur 42, dont le signal de sortie est amplifié par un amplificateur de sortie 43. Ces éléments constituent l'électronique de la tête de mesure. Ils sont reliés à l'électronique de traitement, par exemple par un câble coaxial.

L'électronique de traitement comprend un filtre de sélection 44, composé de deux circuits 44₁ et 44₂ pour former un filtre passe-bande. La sortie 45 du filtre (dite sortie d'analyse) est disponible pour un traitement spécifique et/ou un enregistrement. Par ailleurs, elle alimente un circuit de mesure de l'amplitude 46 qui alimente un détecteur de seuil 47.

Le filtre 44 permet de sélectionner le type de défaut recherché. Dans le cas d'un défaut récurrent par exemple, la fréquence de coupure est calée en fonction du pas des défauts observés.

Par ailleurs, la présence du filtre permet d'assurer que le système n'est pas influencé par la lumière ambiante (50/100 Hz généré par l'éclairage fluorescent).

Enfin, on peut prévoir d'ajuster automatiquement la bande passante du filtre en fonction de la vitesse linéaire de la fibre.

Lorsque l'amplitude du signal dépasse une valeur donnée, le détecteur de seuil 47 provoque la fermeture d'un relais 48, qui déclenche l'alarme. Plus généralement, les contacts du relais 48 sont disponibles pour toutes utilisations externes, telles que l'émission d'alarmes sonores et/ou lumineuses, le marquage de la fibre par jet d'encre, etc... En cas d'alarme, l'opérateur peut arrêter la machine, remédier au problème, puis reprendre le fibrage, en sauvant ainsi le reste de la préforme.

Le seuil d'alarme peut être ajusté à l'aide du potentiomètre 49, en fonction des besoins.

La sortie 410 (sortie analogique) est également disponible pour un traitement et/ou un enregistrement. La sortie analogique 410 est ainsi utilisée pour l'enregistrement en continu de la valeur moyenne de la "rugosité" du revêtement. Cela permet un suivi qualitatif de la production.

La sortie d'analyse 45 peut être utilisée pour visualiser à l'aide d'un oscilloscope ou d'un analyseur de spectre la nature de la perturbation. Elle permet également, à l'aide d'un analyseur FFT temps réel par exemple, de remonter à la vibration de la fibre ou, en cas de défauts périodiques, au pas de ces derniers.

Le dispositif de l'invention permet donc la détection de tout défaut récurrent dont le pas est compris dans la bande passante (ajustable si nécessaire pour rechercher un défaut particulier) du filtre 44, ainsi que de tout défaut de comportement (produit ou machine), par analyse de la fréquence du signal disponible sur la sortie d'analyse 45.

La mise en oeuvre de la tête de mesure est très simple. On place l'ensemble de façon que la fibre passe par le centre du conduit de mesure (22, figure 2). La visualisation sur les dépolis permet de centrer facilement la tête de mesure autour de la fibre à analyser.

On rappelle que le dispositif de l'invention n'est pas uniquement utilisable sur les fibres optiques. Il peut également être mis en oeuvre sur tout produit filaire en mouvement, gainé ou non, tel que les fils de cuivre vernis. Il est encore utilisable pour détecter les défauts de surface sur des produits plats (utilisé sans la partie de centrage).

## Revendications

1. Dispositif de contrôle du revêtement d'un produit filaire en mouvement, comprenant au moins une source lumineuse (23, 24) coopérant d'une part avec des moyens (25, 26) de contrôle du centrage dudit produit filaire par rapport à des moyens (15) de revêtement, et d'autre part avec des moyens (27) de contrôle de la qualité dudit revêtement, caractérisé en ce que lesdits moyens de contrôle de la qualité dudit revêtement comprennent un récepteur optique (29) placé de façon à recevoir les faisceaux lumineux réfléchis par ledit revêtement.

2. Dispositif selon la revendication 1, caractérisé en ce qu'il comprend deux sources lumineuses (23, 24) placées à 90° l'une par rapport à l'autre, dans un plan perpendiculaire audit produit filaire, les faisceaux lumineux émis par lesdites sources lumineuses se croisant au centre dudit produit filaire (21), lorsque celui-ci est correctement centré.

3. Dispositif selon la revendication 2, caractérisé en ce que lesdits moyens de contrôle du centrage comprennent deux écrans dépolis (25, 26) placés chacun perpendiculairement au faisceau lumineux d'une desdites sources lumineuses, ledit produit filaire circulant entre chaque source lumineuse et l'écran dépoli correspondant.

4. Dispositif selon l'une quelconque des revendications 2 et 3, caractérisé en ce que ledit récepteur optique (29) est placé entre lesdites sources lumineuses, dans le même plan et à 45° de chacune d'entre elles.

5. Dispositif selon la revendication 4, caractérisé en ce que ledit récepteur comprend une optique de reprise, un photo-détecteur et une chaîne d'amplification.

6. Dispositif selon l'une quelconque des revendications 1 à 5, caractérisé en ce que lesdites sources lumineuses sont des lasers semi-conducteurs.

7. Dispositif selon l'une quelconque des revendications 1 à 6, caractérisé en ce qu'il est appliqué au contrôle du revêtement d'au moins un des produits filaires appartenant au groupe comprenant les fibres optiques et les fils de cuivres vernis.

8. Dispositif selon l'une quelconque des revendications 1 à 7, caractérisé en ce qu'il comprend des moyens de réglage d'un seuil d'alarme représentatif d'un niveau de dégradation de la qualité du revêtement du produit filaire.

9. Dispositif selon l'une quelconque des revendications 4 à 8, caractérisé en ce qu'il comprend des moyens (44) de filtrage du signal délivré par ledit récepteur, dont la fréquence de coupure est réglable, afin de détecter des défauts récurrents particuliers.

10. Dispositif selon la revendication 9, caractérisé en ce que la bande passante desdits moyens (44) de filtrage est ajustée automatiquement en fonction de la vitesse linéaire dudit produit linéaire.

11. Dispositif selon l'une quelconque des revendications 4 à 10, caractérisé en ce qu'il coopère avec des moyens de traitement externes analysant en continu le signal analogique délivré par ledit récepteur.
